# EUROPEAN PATENT APPLICATION

(11) **EP 2 228 916 A1**
(43) Date of publication of application: **15.09.2010**
(21) Application number: 09275016.5
(22) Date of filing: 12.03.2009
(51) Int. Cl.: H04B 7/185

(54) **Interference removal**

(71) Applicant: Astrim Limited, Stevenage Hertfordshire SG1 2AS (GB)
(72) Inventor: The designation of the inventor has not yet been filed
(74) Representative: Johansson, Anna Olivia

(57) **Abstract**

An apparatus for a satellite communication system is provided, the apparatus comprises: means for monitoring a plurality of frequency channels demultiplexed from a signal comprising one or more carriers; means for identifying at least one frequency channel of the plurality of frequency channels comprising interference; and means for removing the identified at least one frequency channel before the one or more carriers are reformed. By removing the frequency channels comprising interference, the signal-to-noise ratio of the carrier can be improved. Also, if the interference occurs within a carrier, the carrier is usable as long as the removed frequency channels are considerably narrower than the carrier.

## Description

### Field of the Invention

The invention relates to processing of signals subject to interference.

### Background of the Invention

Satellite communication systems are today an important part of our overall global telecommunication infrastructure. As we rely more and more on satellite communication, it has also become more important to protect satellite communication from interference and piracy. Interfering signals can degrade or interrupt satellite communication. Some interference is accidental and due to faulty ground equipment. Other interference is intentional and malicious. Typically, a carrier occupying the same band as the interferer cannot be used and, additionally, the interferer will "rob" downlink power from carriers occupying different frequencies. Additionally, interference may reduce the signal-to-noise ratio of the carrier. There is therefore a demand from commercial satellite operators for satellite communication systems that allows for the removal of unwanted signals.

Satellite communication systems increasingly process signals in both the analogue and digital domain. The signals are often filtered and pre-processed in the analogue domain before being digitised. In the digital domain, the signals may be demultiplexed into a plurality of frequency channels, which can then be processed and routed separately. The frequency channels are then multiplexed again to form the required downlink signals before the conversion back to the analogue domain. A broadband carrier may be demultiplexed and processed as a plurality of constituent narrow frequency channels.

The invention was made in this context.

### Summary of the Invention

According to the invention, there is provided an apparatus for a satellite communication system, comprising: means for monitoring a plurality of frequency channels demultiplexed from a signal comprising one or more carriers; means for identifying at least one frequency channel of the plurality of frequency channels comprising interference; and means for removing the identified at least one frequency channel before the one or more carriers are reformed.

The means for removing the identified at least one frequency channel may be operable to remove at least one frequency channel demultiplexed from a carrier of said one or more carriers to remove interference within said carrier.

The means for removing the at least one identified frequency channel may be operable to remove at least one frequency channel located adjacent a carrier.

The means for removing the identified at least one frequency channel may be configured to null the identified at least one frequency channel. The means for identifying a frequency channel may comprise determining whether the signal level of a frequency channel exceeds a signal level threshold. The signal level threshold may be determined based on an expected power profile of the signal comprising the one or more carriers.

Consequently, the invention provides a way of removing interfering signals. In the case wherein the interfering signal is within a carrier, if the removed frequency channel is much narrower than the carrier, the carrier would still be usable. The invention therefore allows carriers to function in the presence of narrowband interference. As well as direct interference removal, the approach avoids downlink power robbing and improves the signal-to-noise ratio of the carrier.

The apparatus may also comprise a demultiplexer for dividing a carrier into a plurality of frequency channels; a digital signal processor for processing the frequency channels, and a multiplexer for reforming the carrier from the processed channels. The means for monitoring, the means for identifying and the means for removing the identified at least one frequency channel may be provided in the digital signal processor.

According to the invention, there is also provided a satellite communication system comprising the apparatus described above.

According to the invention, there is also provided a method of removing interference in a satellite communication system comprising: monitoring a plurality of frequency channel demultiplexed from one or more carriers; identifying at least one frequency channel comprising interference; and removing the identified at least one frequency channel before the one or more carriers are reformed.

Removing the identified at least one frequency channel may comprise removing a frequency channel demultiplexed from a carrier of said one or more carriers to remove interference within said carrier.

Identifying at least one frequency channel comprising interference may comprise determining whether the signal level of a frequency channel exceeds a signal level threshold. The signal level threshold may be determined based on an expected power profile of the signal comprising the one or more carriers.

The method may also comprise demultiplexing a carrier into a plurality of frequency channels; processing the frequency channels, and after the identified frequency channel with interference has been removed, reforming the carrier from the processed frequency channels.

### Brief Description of the Drawings

Embodiments of the invention will now be described, by way of example, with reference to Figures 1 to 8 of the accompanying drawings, in which:
Figure 1 is a schematic block diagram of a satellite communication system;
Figures 2a and 2b schematically illustrate how a signal comprising interference is filtered and down-converted in the satellite communication system;
Figure 3 is a schematic block diagram of the digital processor of Figure 1;
Figures 4a, 4b, 4c and 4d schematically illustrate how a signal is demultiplexed and multiplexed in the digital processor of Figure 3.
Figure 5 schematically illustrates how a broadband carrier is processed in the digital processor of Figure 3;
Figures 6a and 6b illustrate how an interfering signal within a carrier can be removed in the digital processor of Figure 3; and
Figures 7a and 7b illustrate how an interfering signal between carriers can be removed in the digital processor of Figure 3.

### Detailed Description

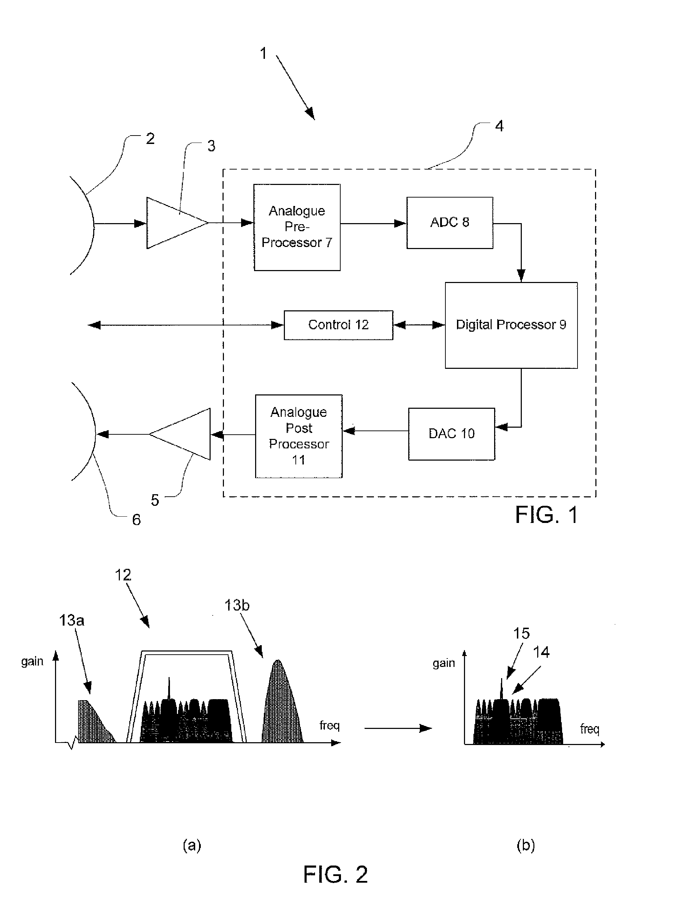

With reference to Figure 1, a satellite communication system 1 comprises a receive antenna subsystem 2 for receiving uplink beams, a low noise amplifier 3 for amplifying the signals received in the uplink beams, an integrated processor 4 for processing the signal, a high power amplifier 5 for amplifying the processed signal and a transmit antenna subsystem 6 for transmitting the signal in downlink beams. The receive antenna subsystem 2 may be configured to receive a plurality of beams from a plurality of subscriber locations or a single beam from a gateway ground station. Similarly, the transmit antenna subsystem 6 may be configured to transmit a plurality of beams to a plurality of subscriber locations or a single beam to a gateway ground station. The satellite communication system may be based on beam-forming network architecture or a spatially switched architecture. It should be realised that Figure 1 is only schematic and the receive and transmit subsystems 2, 6 may be implemented as a single subsystem with a single antenna used to both receive and transmit beams.

The integrated processor 4 comprises an analogue pre-processor 7, an analogue-to-digital converter 8, a digital processor 9, a digital-to-analogue converter 10 and an analogue post-processor 11. The analogue pre-processor is provided to filter out the wanted signals from the received radiation and to down-convert the wanted signals to a frequency in which the signal can be processed by the digital processor. The analogue-to-digital converter 8 is provided to digitise the signal, the digital-to-analogue converter 10 is provided to convert the digital signal back to the analogue domain and the post-processor 11 is provided to reject unwanted images after digital-to analogue-conversion and to up-convert the signal to a suitable frequency for the downlink beams. The digital processor will be described in more detail below. The integrated processor 4 also comprises a control interface connected to the digital processor 9. The control interface 12 provides an interface to a ground station (not shown) for allowing the digital processor 9 to be controlled from ground.

With reference to Figures 2a and 2b, a frequency range of the incoming radiation and the down-converted wanted signal are shown. The incoming radiation comprises a wanted signal 12 and unwanted signals 13a and 13b. The analogue pre-processor may filter out the wanted signal 12 using, for example, a band pass filter. The filtered signal is then down-converted to a lower frequency as shown in Figure 2b. The wanted signal comprises a plurality of carriers 14. The carriers may have different width depending on the type and amount of information being communicated by the carrier. The received radiation may also comprise interfering signals 15. The interfering signals may be an in-band interfering signal within a broadband carrier as shown in Figures 2a and 2b. The interfering signal may also be an interfering signal adjacent to a carrier or between carriers. According to the invention, the interfering signal can be removed in the digital processor 9 as will be described in more detail below.

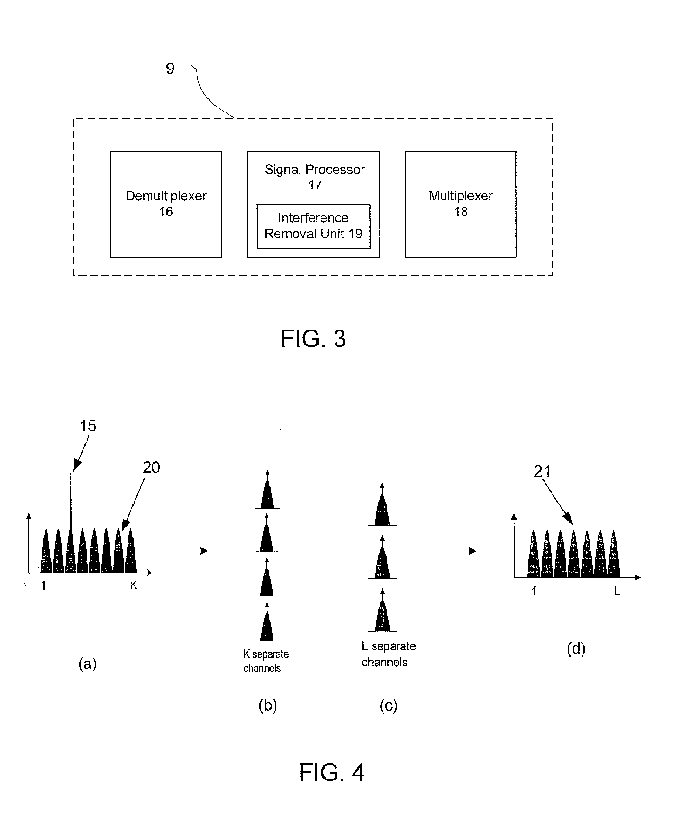

With reference to Figure 3, the digital processor 9 comprises a demultiplexer 16 for separating the wanted signal into a plurality of frequency channels, a signal processor 17 for processing the frequency channels separately and a frequency multiplexer 18 for multiplexing the separate frequency channels together again. The demultiplexer 16 receives the signal from the analogue-to-digital converter 8 and the multiplexer 18 forwards the multiplexed signal to the digital-to-analogue converter 10. The signal processor 17 also comprises an interference removal unit 19 for removing interfering signals as will be described in more detail below.

With reference to Figure 4a to 4d, the demultiplexer 16 may comprise a plurality of filters that divide the digitised signal into a plurality of frequency channels 20. For example, the demultiplexer may separate the signal into K frequency channels 20 of equal width as shown in Figure 4a and 4b. The number of channels into which the signal is separated depends on the application but in some systems may be as high as 1000 channels. Of course, the number of channels can be lower or higher than 1000 channels. When the demultiplexer 16 divides the digital signal into a plurality of frequency channels 20, a narrowband interfering signal 15 is separated into one or more frequency channels 20 as shown in Figure 4a. The signal processor 17 then processes the signals in the frequency channels separately. For example, the signal processor 17 may perform frequency translation and digital beam forming. The signal processor 17 maps the K frequency channels into L new frequency channels 21 as shown in Figures 4c and 4d.

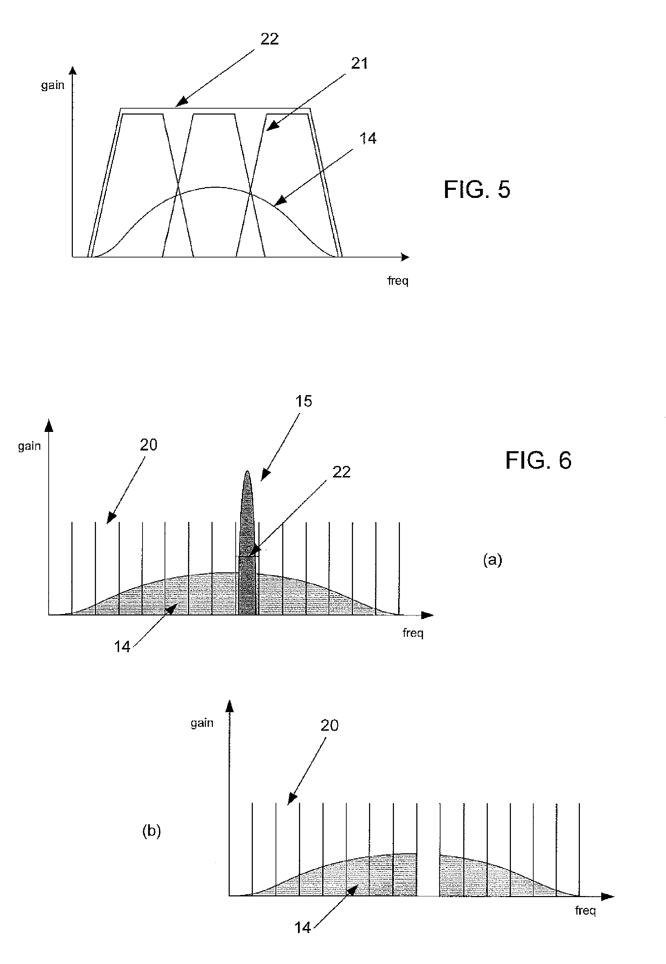

A carrier demultiplexed by the demultiplexer 16 may be wider or narrower than a frequency channel 20. In some embodiments, the channel filters of the demultiplexer 16 are designed such that they create contiguous channels that add to give a continuous passband. This can be used to reform a carrier that spans multiple frequency channels. The processing of a broadband carrier 14, spanning a multiple of frequency channels, is illustrated in Figure 5. The demultiplexer filters the broadband carrier 14 into a plurality of narrowband frequency channels that partially overlap. The constituent frequency channels are then routed and beam-formed together by the signal processor 17. In the multiplexer 18 the processed frequency channels 21 are then added up to provide a mathematically exact flat response 22 to reform the broadband carrier 14.

During the digital signal processing of the individual frequency channels of a signal comprising one or more carriers, an interfering signal can be removed. Figures 6a and 6b illustrate how an in-band interfering signal 15 within a carrier 14 is removed. The interference removal unit 19 provides a spectrum analysis function by monitoring the signal level of the demultiplexed frequency channels. When the signal level exceeds a predefined threshold 22, it is assumed that an interfering signal is detected and the frequency channel is nulled. The predefined threshold 22 may be reprogrammable. The nulling of the frequency channel can be achieved by setting the amplitude of the whole frequency channel to zero. The remaining frequency channels can then be processed, frequency translated and multiplexed to reform the carrier 14. If the frequency channel is significantly narrower than the carrier, the information of the carrier that is lost in the nulled frequency channel is not crucial for interpreting the carrier and the carrier is still usable. Also, by removing the frequency channels containing the interfering signal, the signal-to-noise ratio of the carrier is improved. Moreover, power robbing from other carriers by the interferer is reduced.

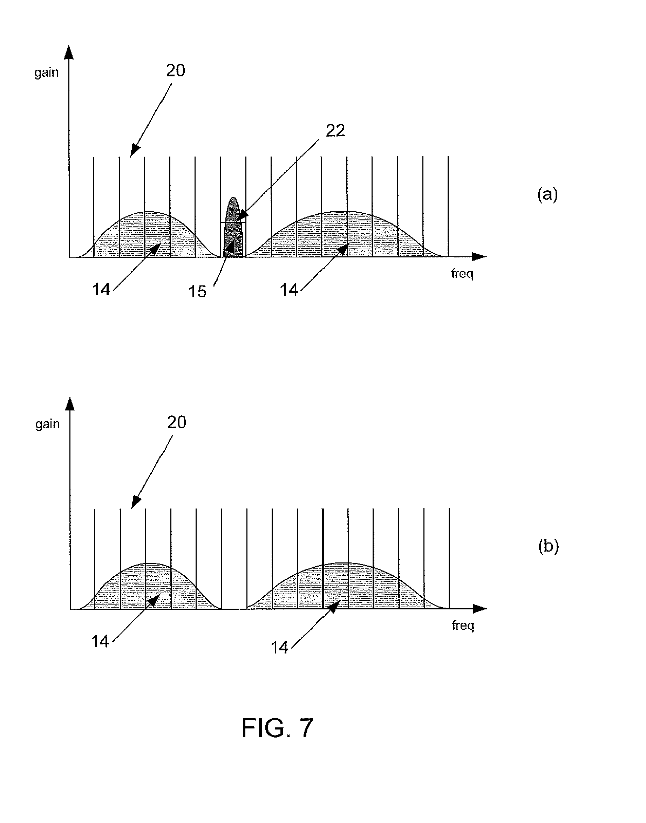

Interfering signals between carriers 14 can also be removed as shown in Figures 7a and 7b. The interference removal unit 19 monitors the signal level in the frequency channels and when the signal level exceeds a threshold 22, it is assumed that an interfering signal 15 is detected and the whole frequency channel comprising the interfering signal is nulled. The remaining frequency channels can be processed, frequency translated and multiplexed to reform the carriers 14. By removing the interfering signal, the signal-to-noise ratio is improved and power available for transmitting the carriers is not used up by the interfering signal. When the interference is between carriers, no information, or little information, in the carriers is lost.

It should be realised that although only one frequency channel is shown to be nulled in Figures 6a, 6b, 7a and 7b, an interfering signal can span a number of channels or the signal may comprise a plurality of interfering signals and therefore more than one frequency channel may need to be removed.

The signal level threshold 22 may be based on the power profile of a typical signal comprising one or more carriers. Alternatively, the power profile of the carriers in the signals may be measured to determine the thresholds. The signal level threshold may be fixed at the same level for all frequency channels or determined individually for each frequency channel. For example, the interference removal unit 19 may measure the power profile for a predetermined time and determine an expected frequency level for each frequency channel. The signal change level threshold 22 may vary, as shown in Figures 6a and 7a, depending on the location of the frequency channel with respect to a carrier. For example, if the frequency channel lies in the middle of carrier, the threshold 22 may be higher than if the frequency channel lies between carriers. The threshold for a frequency channel within a carrier may be higher than the signal level of the frequency channel of the carrier having the highest gain whereas the threshold for a frequency channel between carriers may be lower than the highest signal level of the carrier. The signal level thresholds 22 may be stored before launch of the satellite system or reprogrammed in situ. The signal level thresholds may also be reprogrammed as the frequencies and amplitude of carrier bands change during the lifetime of the satellite. In some of the embodiments, the threshold value may be programmed from a ground station via the control interface 12.

The invention can be used in any satellite payload with a digital processor architecture in which a larger bandwidth channel is divided into a number of narrowband channels. Particularly, the removal of frequency channels comprising interference can be applied in both a digital beam forming network architecture, with phased arrays or an array fed reflector, or in a spatially switched architecture. However, the applications of the invention are not limited to satellite payloads. The invention can be used in any system in which it is desirable to remove unwanted signals.

The interference removal unit 19 may be implemented as a control algorithm in the signal processor 17. The control algorithm may comprise the signal level thresholds. Alternatively, the signal level thresholds may be retrieved from a memory stored elsewhere in the satellite payload or on ground. The control algorithm for carrying out the interference removal may be implemented using hardware, software or a combination of hardware and software.

As an alternative to the interference removal unit 19 being provided in the signal processor 17, it may be provided between the demultiplexer 16 and the processor 17. The interference removal unit 19 may set the amplitude in the frequency channel to zero before the frequency channels are forwarded to the digital signal processor 17. As yet another alternative, the functions provided by the interference removal unit 19 may be shared between the demultiplexer 16 and the signal processor 17. The demultiplexer 16 may monitor the signal levels of the frequency channels and inform the digital signal processor which frequency channels comprise interference so as to allow the signal processor 17 to null them. Additionally, if the digital signal processor provides a beam forming network, the frequency channels comprising interference may be removed when beam weights are applied during the beam forming process.

Moreover, although the invention has been described with respect to a broadband carrier, interference removal can also be applied to narrower bandwidth carriers. As long as the frequency channels and the interfering signal are narrower than the carrier, some of the information carried by the carrier can be saved. The system can be designed to make the frequency channels narrower in order to reduce the amount of information of the carrier that is lost when the interfering signal is removed.

Whilst specific examples of the invention have been described, the scope of the invention is defined by the appended claims and not limited to the examples. The invention could therefore be implemented in other ways, as would be appreciated by those skilled in the art.

For instance, although the analogue pre-processor 7, the analogue-to-digital converter 8, the digital processor 9, the digital-to-analogue converter 10 and the analogue post-processor 11 of the satellite system have been described to be provided in an integrated processor, the components could of course also be provided separately. Moreover, the components have only been described to provide an example of a system in which the invention could be implemented and the example should not be interpreted as limiting.

Additionally, although the invention has been described with respect to a satellite system, it should be realised that the invention could be used in any system for processing signals in the digital domain.

## Claims

1. Apparatus for a satellite communication system, comprising:
means for monitoring a plurality of frequency channels demultiplexed from a signal comprising one or more carriers;
means for identifying at least one frequency channel of the plurality of frequency channels comprising interference; and
means for removing the at least one identified frequency channel before the one or more carriers are reformed.

2. Apparatus according to claim 1, wherein the means for removing the identified at least one frequency channel is operable to remove at least one frequency channel demultiplexed from a carrier of said one or more carriers to remove interference within said carrier.

3. Apparatus according to claim 1, wherein the means for removing the at least one identified frequency channel is operable to remove at least one frequency channel located adjacent to a carrier.

4. Apparatus according to claim 1, 2 or 3, wherein the means for removing the at least one identified frequency channel is configured to null the identified at least one frequency channel.

5. Apparatus according to claim any one of the preceding claims, wherein the means for identifying at least one frequency channel comprises determining whether the signal level of a frequency channel exceeds a signal level threshold.

6. Apparatus according to claim 5, wherein the means for identifying provides a spectrum analysis function.

7. Apparatus according to claim 5 or 6, wherein the signal level threshold is determined based on an expected power profile of the signal comprising the one or more carriers.

8. Apparatus according to any one of the preceding claims, further comprising:
a demultiplexer for dividing a carrier into a plurality of frequency channels;
a digital signal processor for processing the frequency channels, and
a multiplexer for reforming the carrier from the processed channels.

9. Apparatus according to claim 8, wherein the digital signal processor comprises the means for monitoring, means for identifying and means for removing the identified at least one frequency channel.

10. A satellite communication system comprising the apparatus of any one of the preceding claims.

11. A method of rejecting interference in a satellite communication system comprising:
monitoring a plurality of frequency channel demultiplexed from a signal comprising one or more carriers;
identifying at least one frequency channel comprising interference; and
removing the identified at least one frequency channel before reforming the one or more carriers.

12. A method according to claim 11, wherein removing the identified at least one frequency channel comprises removing a frequency channel demultiplexed from a carrier of said one or more carriers to remove interference within said carrier.

13. A method according to claim 11 or 12, wherein identifying a frequency channel comprises determining whether the signal level of a frequency channel exceeds a signal level threshold.

14. A method according to claim 13, wherein the signal level threshold is determined based on an expected power profile of the signal comprising the one or more carriers.

15. A method according to any one of claims 11 to 14, further comprising demultiplexing a carrier into a plurality of frequency channels;
processing the frequency channels, and
after the identified at least one frequency channel with interference has been removed, reforming the carrier from the processed frequency channels.
